# EUROPÄISCHE PATENTSCHRIFT

(11) **EP 1 176 652 B1**
(45) Veröffentlichungstag und Bekanntmachung des Hinweises auf die Patenterteilung: **10.09.2008**
(21) Anmeldenummer: 01115251.9
(22) Anmeldetag: 23.06.2001
(51) Int. Cl.: H01M 8/10, H01M 4/88

(54) **Tinte zur Herstellung von Membran-Elektroden-Einheiten für PEM-Brennstoffzellen**
Ink for manufacturing membrane electrode units for PEM fuel cells
Encre pour la fabrication d'unités membrane-électrodes pour piles à combustible de type PEM

(30) Priorität: 29.07.2000 DE 10037074
(43) Veröffentlichungstag der Anmeldung: 30.01.2002
(73) Patentinhaber: Umicore AG & Co. KG, 63457 Hanau-Wolfgang (DE)
(72) Erfinder: Starz, Karl-Anton, Dr., 63517 Rodenbach (DE); Zuber, Ralf, Dr., 63762 Grossostheim (DE); Krämer, Anita, 63543 Neuberg (DE); Fehl, Knut, 36381 Schlüchtern-Ramholz (DE); Köhler, Joachim, Dr., 63486 Bruchköbel (DE); Wittpahl, Sandra, 63179 Obertshausen (DE)
(74) Vertreter: Stellbrink, Axel

(56) Entgegenhaltungen:
- EP-A- 0 788 173
- EP-A- 0 987 777
- WO-A-01/71840
- US-A- 5 084 144
- US-A- 5 330 860
- US-A- 6 074 692
- MAKOTO UCHIDA ET AL: "NEW PREPARATION METHOD FOR POLYMER-ELECTROLYTE FUEL CELLS" JOURNAL OF THE ELECTROCHEMICAL SOCIETY, ELECTROCHEMICAL SOCIETY. MANCHESTER, NEW HAMPSHIRE, US, Bd. 142, Nr. 2, Februar 1995 (1995-02), Seiten 463-468, XP002155036 ISSN: 0013-4651

## Beschreibung

Die vorliegende Erfindung betrifft eine Tinte für die Herstellung von Membran-Elektroden-Einheiten für Brennstoffzellen, insbesondere für Polymer-Elektrolyt-Membran-Brennstoffzellen (PEM-Brennstoffzellen). Es wird eine neuartige, wasserhaltige Katalysator-Tinte zur Herstellung von mit Katalysator beschichteten Membranen, von Elektroden und von Membran-Elektroden- Einheiten (MEE) beschrieben.

Brennstoffzellen wandeln einen Brennstoff und ein Oxidationsmittel örtlich voneinander getrennt an zwei Elektroden in Strom, Wärme und Wasser um. Als Brennstoff kann Wasserstoff oder ein wasserstoffreiches Gas, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren zunehmend Bedeutung als Alternative für herkömmliche Verbrennungskraftmaschinen. Die PEM-Brennstoffzelle eignet sich auf Grund ihrer kompakten Bauweise, ihrer Leistungsdichte sowie ihres hohen Wirkungsgrades für den Einsatz als Energiewandler in Kraftfahrzeugen.

Die PEM-Brennstoffzelle besteht aus einer stapelweisen Anordnung ("Stack") von Membran-Elektroden-Einheiten (MEE), zwischen denen bipolare Platten zur Gaszufuhr und Stromableitung angeordnet sind. Eine Membran-Elektroden-Einheit besteht aus einer festen Polymer-Elektrolyt-Membran, die auf beiden Seiten mit Katalysator enthaltenden Reaktionsschichten versehen ist. Eine der Reaktionsschichten ist als Anode für die Oxidation von Wasserstoff und die zweite Reaktionsschicht als Kathode für die Reduktion von Sauerstoff ausgebildet. Auf diese Reaktionsschichten werden sogenannte Gasverteilerstrukturen aus Kohlefaserpapier oder Kohlevlies aufgebracht, die einen guten Zugang der Reaktionsgase zu den Elektroden und eine gute Ableitung des Zellenstroms ermöglichen. Anode und Kathode enthalten sogenannte Elektrokatalysatoren, die die jeweilige Reaktion (Oxidation von Wasserstoff an der Anode beziehungsweise Reduktion von Sauerstoff an der Kathode) katalytisch unterstützen. Als katalytisch aktive Komponenten werden bevorzugt die Metalle der Platingruppe des Periodensystems der Elemente eingesetzt. In der Mehrzahl werden sogenannte Trägerkatalysatoren verwendet, bei denen die katalytisch aktiven Platingruppenmetalle in hochdisperser Form auf die Oberfläche eines leitfähigen Trägermaterials aufgebracht wurden.

Die Polymer-Elektrolyt-Membran besteht aus Protonen leitenden Polymermaterialien. Diese Materialien werden im folgenden auch kurz als Ionomere bezeichnet. Bevorzugt wird ein Tetrafluorethylen-Fluorvinylether-Copolymer mit Säurefunktionen, insbesondere Sulfonsäuregruppen, verwendet. Solche Materialien werden zum Beispiel unter den Handelsnamen Nafion® (E.I. du Pont) oder Flemion® (Asahi Glass Co.) vertrieben. Es sind jedoch auch andere, insbesondere fluorfreie Ionomermaterialien, wie sulfonierte Polyetherketone oder Arylketone oder Polybenzimidazole einsetzbar. Darüberhinaus sind auch keramische Membrane und andere Hochtemperaturmaterialien verwendbar.

Die Leistungsdaten einer Brennstoffzelle hängen entscheidend von der Qualität der auf die Polymer-Elektrolyt-Membran aufgebrachten Katalysatorschichten ab. Diese Schichten sind zumeist hochporös und bestehen gewöhnlich aus einem Ionomer und einem darin dispergierten feinteiligen Elektrokatalysator. Zusammen mit der Polymer-Elektrolyt-Membran bilden sich in diesen Schichten sogenannte Drei-PhasenGrenzflächen aus, wobei das Ionomer in direktem Kontakt mit dem Elektrokatalysator und den über das Porensystem an die Katalysatorpartikel herangeführten Gasen (Wasserstoff an der Anode, Luft an der Kathode) steht.

Zur Herstellung der Katalysatorschichten werden Ionomer, Elektrokatalysator, Lösungsinittel und gegebenenfalls andere Zusätze sorgfältig miteinander zu einer Tinte, beziehungsweise Paste, vermischt. Zur Ausbildung der Katalysatorschicht wird die Tinte durch Pinseln, Walzen, Sprühen, Rakeln oder Drucken entweder auf die Gasverteilerstrukur (z.B. Kohlefaservlies oder Kohlefaserpapier) oder direkt auf die Polymermembran aufgetragen, getrocknet und gegebenenfalls nachbehandelt. Im Falle der Beschichtung der Ionomermembran mit Katalysatorschicht fügt man anschließend die unkatalysierten Gasverteilerstrukturen auf Anoden- und Kathodenseite mit der Membran zusammen und erhält damit die Membran-Elektroden-Einheit (MEE). Wenn man die Gasverteiler mit Katalysatorschicht beschichtet, werden diese katalysierten Gasverteilerstrukturen auf die beiden Seiten der Ionomermembran gelegt und anschließend mit dieser verpresst, wobei man ebenfalls eine MEE erhält.

Aus der Patentliteratur sind verschiedene Tinten-Zusammensetzungen bekannt. So wird in der DE 196 11 510 A1 zur Herstellung von Membran-Elektroden-Einheiten für Brennstoffzellen eine Tinte verwendet, die, bezogen auf das Gesamtgewicht der Tinte, 3,1 Gew.-% eines Pt/C-Katalysators ( 30 Gew.-% Platin auf Ruß), 30,9 Gew.-% einer 5%-igen lonomerlösung in einer Mischung aus 90 Anteilen Isopropanol und 10 Anteilen Wasser, 37,2 Gew.-% Glyzerin, 24,8 Gew.-% Wasser, 2,5 Gew.-% Tetrabutylammoniumhydroxid und 1,5 Gew.-% eines Porenbildners enthält. Der Wassergehalt der Tinte beträgt insgesamt 27,7 Gew.-%. Auf Grund des hohen Gehaltes dieser Tinte an Isopropanol sind in der Fertigung entsprechende Maßnahmen zu ergreifen, um eine ungewollte Entzündung des Katalysators zu verhindern. Darüber hinaus wurde festgestellt, dass die Tinte auf Grund des niedrigen Siedepunktes von Isopropanol nur während einer sehr kurzen Zeit mittels Siebdruck verarbeitet werden kann, die sogenannte "Siebstandzeit" beim Siebdrucken ist unbefriedigend. Weiterhin bewirkt das in der Tinte vorhandene Glyzerin, daß die Membran-Elektroden-Einheit (MEE) eine sehr lange Aktivie-rungs-und Einlaufzeit benötigt, bis man akzeptable elektrische Werte erhält.

Weiterhin sind Katalysator-Tinten bekannt, die als Lösungsmittel Alkohole mit einem Siedepunkt über 100°C enthalten (US 5,871,552) oder Alkylencarbonate, wie beispielsweise Propylencarbonat, verwenden (US 5,869,416). Weiterhin beschreibt die DE 198 12 592 A1 eine Tinte aus zwei nicht miteinander mischbaren organischen Lösungsmitteln A und B. Als Lösungsmittel A werden ein- oder mehrwertige Alkohole, Glykole, Glykoletheralkohole, Glykolether und Mischungen davon eingesetzt. Bei Lösungsmittel B handelt es sich um unpolare Kohlenwasserstoffe oder schwach polare Lösungsmittel. Eine typische Tinte dieser Art (siehe Beispiel 1 aus der DE 198 12 592 A1) enthält 13,4 Gew.-% eines Pt/C-Elektrokatalysators, 67 Gew.-% einer 6,7%-igen Lösung eines Ionomers (Nafion) in Propylenglykol (Lösungsmittel A), 17,9 Gew.-% Dodecansäuremethylester (Lösungsmittel B) und 1,7 Gew.-% Natronlauge (10%-ig). Alle diese Katalysatortinten enthalten kein Wasser sondern nur organische Lösungsmittel. Aufgrund des hohen Lösungsmittelanteils neigen sie zur Entzündung. Die erheblichen Emissionen an organischen Verbindungen (Lösungsmittel sind "volatile organic compounds" = VOC) stellen hinsichtlich Arbeits- und Umweltschutz ein Problem dar, insbesondere bei der Massenfertigung von Komponenten für Brennstoffzellen.

Es sind deshalb Tinten bekannt geworden, deren wesentliches Lösungsmittel Wasser ist. So beschreibt die EP 0309337 A1 eine Wasser enthaltende Elektroden-Tinten, die Alkohole und Wasser enthalten. Das Ionomer ist hierbei in einer Mischung aus Wasser und Ethanol, beziehungsweise Isopropanol, gelöst, wobei der Wassergehalt größer als 86 Vol.-% beträgt.

EP 0 026 979 A2 beschreibt eine Tinte auf der Basis von Wasser, die jedoch kein Ionomer, sondern hydrophobes Teflon enthält. Diese Tinte ist deshalb für Elektroden und MEEs, die in PEM-Brennstoffzellen Verwendung finden, nicht geeignet.

Die EP 0 731 520 A1 beschreibt eine Tinte, welche einen Katalysator, Ionomer und Lösungsmittel enthält, wobei als Lösungsmittel Wasser verwendet wird. Diese Tinte enthält außer dem Ionomer keine weiteren organischen Komponenten. Die Überprüfung dieser Tinte durch die gegenwärtigen Erfinder ergab, dass sie zu schlecht auf der Polymermembran haftenden Elektrodenschichten führt. Dadurch ist die elektrische Leistung der mit dieser Tinte hergestellten MEEs ungenügend. Ebenso zeigt sich beim Siebdruck mit dieser Tinte, dass sie sehr schnell eindickt und somit ungenügende Standzeiten beim Siebdruck aufweist.

In der US-A-5 084 144 wird ein Verfahren zur Steigerung der elektrokatalytischen Aktivität einer Gasdiffusionselektrode mit einer gasdurchlässigen Fläche und, gegenüber angeordnet, einer katalysierbaren Fläche mit einem Trägermaterial beschrieben, wobei die Gasdiffusionselektrode auf der Oberfläche des Trägermaterials im wesentlichen kein katalytisches Metall aufweist.

Die EP-A-0 987 777 beschreibt eine Katalysatorschicht auf einem Substratmaterial, welche ein protonenleitendes Polymer, elektrisch leitfähige Kohlenstoffpartikel und feinteilige Partikel mindestens eines Edelmetalls enthält.

Es ist daher Aufgabe der vorliegenden Erfindung, eine Katalysator-Tinte auf Wasserbasis anzugeben, die keine toxischen und/oder leicht entflammbaren Lösungsmittel enthält und die darüber hinaus die Nachteile der bereits in der EP 0 731 520 A1 beschriebenen Katalysator-Tinte auf Wasserbasis (schlechte Haftung, schlechte elektrische Leistung, geringe Siebstandzeit) überwindet. Die Verwendung dieser neuen Tinte soll eine hohe Produktionssicherheit im Bereich Arbeits- und Umweltschutz garantieren und sich besonders für den Siebdruck eignen.

Die Aufgabe wird durch eine Tinte für die Herstellung von Elektroden für PEM-Brennstoffzellen gelöst, welche ein Katalysatormaterial, ein Ionomer, Wasser und ein organisches Lösungsmittel (Co-Solvens) enthält. Die Tinte ist **dadurch gekennzeichnet, dass** das organische Lösungsmittel wenigstens eine Verbindung aus der Gruppe der linearen Dialkohole mit einem Flammpunkt oberhalb 100°C ist und in einer Konzentration zwischen 1 und 50 Gew.-%, bezogen auf das Gewicht des Wassers, in der Tinte vorliegt.

Unter linearen Dialkoholen werden zweiwertige Alkohole verstanden, die in ihrem linearen, kettenförmigen Molekülgerüst zwei Hydroxyl-Gruppen besitzen. Die Hydroxylgruppen müssen nicht benachbart (d.h. vicinal) zueinander sein. Das Kettengerüst kann aus aliphatischen CH₂-Gruppen, ggf. mit dazwischenliegenden Sauerstoffatomen (Etherbrücken) bestehen. Mögliche organische Lösungsmittel für die erfindungsgemäße Katalysator-Tinten sind beispielsweise:

| | |
|---|---|
| Ethylenglykol (1,2-Ethandiol) | Flammpunkt 111°C |
| Diethylenglykol | Flammpunkt 140°C |
| 1,2-Propylenglykol (1,2-Propandiol) | Flammpunkt 101°C |
| 1,3-Propylenglykol (1,3-Propandiol) | Flammpunkt 131°C |
| Dipropylenglykol | Flammpunkt 118°C |
| 1,3-Butandiol | Flammpunkt 109°C |
| 1,4-Butandiol | Flammpunkt 130°C |

und weitere Verbindungen dieser Gruppe. Die Bestimmung des Flammpunktes erfolgt im geschlossenen Tiegel nach Pensky-Martens gemäß der europäischen Norm EN 22719. Die Angaben sind der Datenbank CHEMSAFE (Dechema e.V.) entnommen und stellen "empfohlene Werte" dar.

Diese Lösungsmittel sind in der Regel in Wasser löslich, bzw. mit Wasser mischbar, hydrologisch und toxikologisch weitgehend unbedenklich. So sind Ethylenglykol, die Propylenglykole und Butylenglykole nicht kennzeichnungspflichtig. Ihre Verwendung in industriellen Trocknungsanlagen stellt somit keine Probleme dar.

Es hat sich gezeigt, dass eine Tinte, welche im wesentlichen Wasser als Lösungsmittel enthält, eine überraschend gute Haftfestigkeit auf der Polymermembran aufweist, wenn sie als zusätzliches Lösungsmittel 1 bis 50 Gew.-%, bevorzugt 5 bis 25 Gew.-%, (bezogen auf den Wassergehalt der Tinte) einer Verbindung aus der Gruppe der linearen Dialkohole mit Flammpunkten oberhalb von 100°C enthält. Darüber hinaus weist diese Tinte sehr gute Standzeiten beim Siebdruck sowie gute elektrische Leistungswerte in der PEM-Brennstoffzelle auf. Offensichtlich bewirken die linearen Dialkohole, daß ein inniger Kontakt der Katalysatorschicht mit der Ionomermembran und somit eine gute Haftung und elektrische Leistung zustande kommt.

Da in der erfindungsgemäßen Tinte die Hauptkomponente nach wie vor Wasser ist (Lösungsmittelanteil bevorzugt 5 - 25 Gew.-% bezogen auf den Wassergehalt) und die linearen Dialkohole einen Flammpunkt von über 100 °C besitzen, treten die von den herkömmlichen, Lösungsmittel enthaltenden Tinten bekannten Probleme der leichten Entflammbarkeit und der niedrigen Zündtemperaturen nicht auf.

Bei der Verarbeitung dieser Tinten wird also eine hohe Produktionssicherheit erreicht. Außerdem werden bei der Verwendung im Siebdruckverfahren eine lange Siebstandzeit ermöglicht, die diejenige der reinen Wasserpasten (nach EP 0 731 520 A1) deutlich übertrifft.

Zur Herstellung der erfindungsgemäßen Paste, Tinte bzw. Zubereitung werden die Komponenten
- EM-haltiger Trägerkatalysator (z. B. 40% Pt auf Leitfähigkeitsruß)
- Ionomerlösung in wäßriger Form (z.B. wäßrige Nafion-Lösung)
- voll entsalztes Wasser
- zusätzliches, organisches Lösungsmittel (Co-Solvens)
in einem geeigneten Behälter eingewogen und dispergiert. Als Dispergiergeräte kommen Vorrichtungen zur Erzeugung hoher Scherkräfte (Dissolver, Walzwerke etc.) zum Einsatz.

Die erfindungsgemäße Tinte wird direkt auf eine Polymer-Elektrolyt-Membran aufgebracht. Sie kann aber auch auf die Gasverteilerstruktur (z.B. Kohlefaserpapier oder Kohlefasergewebe) aufgebracht werden. Hierzu sind verschiedene Beschichtungsverfahren wie Sprühen, Siebdruck, Schablonendruck oder Offsetdruck einsetzbar. Geeignete Beschichtungsverfahren sind in der US 5,861,222 beschrieben.

Die Polymer-Elektrolyt-Membran besteht aus einer Protonen leitenden Folie. Ein solches Material wird als Folie zum Beispiel unter dem Handelsnamen Nafion® von E.I. DuPont vertrieben. Daneben ist das Ionomer auch in wäßriger Lösung mit niedermolekularen, aliphatischen Alkoholen erhältlich (Fa. Fluka, Buchs; Fa. Aldrich, Steinheim). Hieraus können wäßrige Lösungen des Ionomers in höheren Konzentrationen (10 %, 20 %) hergestellt werden. Es sind jedoch prinzipiell auch alle anderen, insbesondere fluorfreie Ionomermaterialien, wie sulfonierte Polyetherketone, Arylketone oder Polybenzimidazole als Folie oder als Lösung einsetzbar.

Als Katalysatoren können alle auf dem Gebiet der Brennstoffzellen bekannten Elektrokatalysatoren eingesetzt werden. Im Falle von Trägefkatalysatoren wird als Träger ein feinteiliger, elektrisch leitfähiger Kohlenstoff eingesetzt. Bevorzugt werden Ruße, Graphit oder Aktivkohlen verwendet. Als katalytisch aktive Komponente dienen die Platingruppenmetalle, z.B. Platin, Palladium, Ruthenium und Rhodium oder Legierungen davon. Die katalytisch aktiven Metalle können weitere Legierungszusätze wie Kobalt, Chrom, Wolfram, Molybdän, Vanadium, Eisen, Kupfer, Nickel etc. enthalten. Abhängig von der Schichtdicke der Elektrode sind Flächenkonzentrationen an Metall in den Reaktionsschichten zwischen 0,01 und 5 mg Edelmetall/cm² möglich. Für die Herstellung der Reaktionsschichten können Platin-Elektrokatalysatoren auf Ruß (Pt/C) mit 5 bis 80 Gew.-% Platin, aber auch trägerfreie Katalysatoren wie beispielsweise Platin-Mohre oder Platin-Pulver mit hoher Oberfläche eingesetzt werden. Geeignete Elektrokatalysatoren sind in den Patentschriften EP 0 743 092 und DE 44 43 701 beschrieben.

Neben diesen Komponenten kann die erfindungsgemäße Tinte noch Additive wie Netzmittel, Verlaufsmittel, Entschäumer, Porenbildner, Stabilisatoren, ph-Wert-Modifikatoren und andere Substanzen enthalten.

Zur Ermittlung der elektrischen Leistung wird die mit den Katalysatortinten hergestellte Membran-Elektroden-Einheit im PEM-Vollzellentest untersucht. Dabei wird die PEM-Zelle mit Wasserstoff und Luft bei Normaldruck betrieben (ca. 1 bar) und die Kennlinie (Spannungs/Stromdichte-Verlauf) ermittelt. Aus dieser Kennlinie wird die erreichte Zellspannung bei einer Stromdichte von 500 mA/cm² als Maßzahl für die elektrokatalytische Leistungsfähigkeit der Zelle bestimmt. Zur besseren Vergleichbarkeit der Tintensysteme wird die Katalysatorbeladung konstant belassen (Gesamtbeladung ca. 0,2 bis 0,6 mg Pt/cm²).

Die erfindungsgemäße Tinte läßt sich in verschiedenen Beschichtungsverfahren gut verarbeiten und besitzt eine sehr gute Haftung auf allen gängigen Polymer-Elektrolyt-Membranen (Ionomerfolien wie beispielsweise Nafion® oder Flemion®). Die damit hergestellten Membran-Elektroden-Einheiten zeigen eine hohe elektrische Leistung in der PEM-Brennstoffzelle. Die elektrische Leistung liegt typischerweise weit über derjenigen einer reine Wasserpaste.

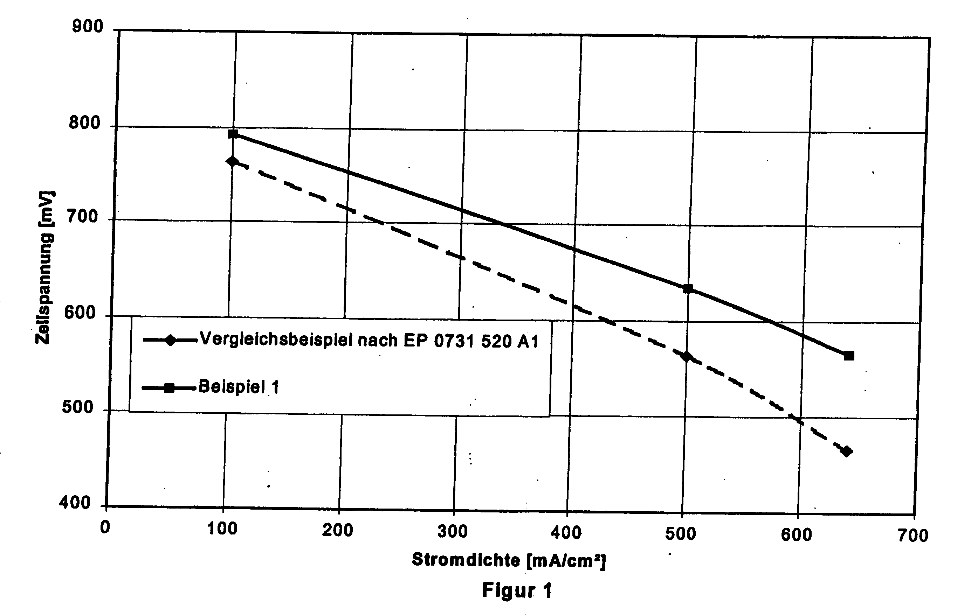

Die nachfolgenden Beispiele sollen die Erfindung näher erläutern. Figur 1 zeigt die Abhängigkeit der Zellspannung von der Stromdichte für die in Vergleichsbeispiel 1 und Beispiel 1 unter Verwendung der erfindungsgemäßen Tinte hergestellten Membran-Elektroden-Einheiten.

### Vergleichsbeispiel 1: (Tinte nach EP 0 731 520 A1)

Die folgenden Komponenten wurden eingewogen und mit einem Dispergiergerät homogenisiert:

| | |
|---|---|
| 15, 0 g | Pt-Trägerkatalysator (40%Pt/C, Fa. Degussa-Hüls) |
| 50,0 g | Nafion®-Lösung (10 % in Wasser) |
| 35,0 g | Wasser (vollentsalzt) |
| 100,0 g | |

Das Gewichtsverhältnis Katalysator/Nafion® lag bei dieser Tinte bei 3:1. Die Tinte wurde im Siebdruckverfahren auf die Anoden- und Kathodenseite einer Ionomermebran Nafion® 112 (Fa. DuPont) in Form eines Quadrates mit einer Kantenlänge von 7,1 cm (aktive Zellfläche 50 cm²) aufgebracht und anschließend bei 80°C getrocknet. Die Haftung der Katalysatorschichten auf der Ionomermembran erwies sich als ungenügend, insbesondere kam es nach Trockung und anschließender Wässerung der Ionomermembran zu einer stellenweisen Ablösung der Elektrodenschichten.

Nach Trocknung und Wässerung wurde die MEE zwischen zwei Gasverteilersubstrate gelegt (TORAY-Kohlepapier, Dicke 225 µm) und in einer PEM-Vollzelle im Wasserstoff/Luft-Betrieb vermessen. Bei einer Stromdichte von 500 mA/cm² wurde eine Zellspannung von 560 mV gemessen (siehe Abb. 1, Typ A). Die gesamte Pt-Beladung (Anode und Kathode) betrug 0, 6 mg Pt/cm².

### Beispiel 1:

In Abänderung von Vergleichsbeispiel 1 wurde die Wassermenge auf 27 g vermindert und erfindungsgemäß durch 8 g Dipropylenglykol ersetzt:

| | |
|---|---|
| 15,0 g | Pt-Trägerkatalysator (40% Pt/C, Fa. Degussa-Hüls) |
| 50,0 g | Nafion®-Lösung (10 % in Wasser) |
| 27,0g | Wasser (vollentsalzt) |
| 8,0 g | Dipropylenglykol |
| 100,0 g | |

Das Gewichtsverhältnis Katalysator/Nafion® lag bei 3:1. Der Anteil von Dipropylenglykol betrug 11 Gew.-% (bezogen auf den Gesamtwassergehalt). Die Tinte wurde, wie in Vergleichsbeispiel 1 beschrieben, auf Anoden- und Kathodenseite der Ionomermembran Nafion® 112 aufgebracht. Die Haftung der Elektrodenschichten auf der Membran nach der Trocknung und Wässerung war sehr gut, es war keine Ablösung der Schichten zu beobachten. Die gesamte Pt-Beladung betrug 0,6 mg Pt/cm². Die so hergestellte MEE wurde im PEM-Vollzellentest vermessen. Bei einer Stromdichte von 500 mA/cm² wurde eine Zellspannung von 634 mV gemessen. Dieser Wert liegt um ca. 70 mV über der Zellspannung von Vergleichsbeispiel 1 (s. Figur 1). Die erfindungsgemäße Tinte ist somit der Tinte gemäß Vergleichsbeispiel 1 deutlich überlegen.

### Beispiel 2:

Die folgenden Komponenten werden eingewogen und homogenisiert:

| | |
|---|---|
| 15,0 g | PtRu-Trägerkatalysator (40% PtRu/C: 26,4% Pt, 13,6% Ru; Katalysator entsprechend US 6,007,934) |
| 60,0 g | Nafion®-Lösung (10 % in Wasser) |
| 15,0 g | Wasser (vollentsalzt) |
| 10,0 g | Ethylenglykol |
| 100,0 g | |

Das Gewichtsverhältnis Katalysator/Nafion® lag bei 2,5:1. Der Anteil von Ethylenglykol betrug 14,5 Gew.-% (bezogen auf den Gesamtwassergehalt). Die Tinte wurde auf die Anodenseite einer Ionomermembran (Nafion® 112, F. DuPont) aufgebracht und anschließend bei 80°C getrocknet. Anschließend wurde auf die Rückseite der Membran (Kathodenseite) die erfindungsgemäße Tinte aus Beispiel 1 aufgebracht und wiederum getrocknet. Nach der Tocknung wurde die MEE gewässert und anschließend feucht zwischen zwei Gasverteilersubstrate gelegt. Die Haftung der Katalysatorschichten auf der Membran war sehr gut. Die Messung erfolgte in der PEM-Vollzelle im Wasserstoff/Luft-Betrieb. Bei 500 mA/cm² wurde eine Zellspannung von 620 mV gemessen. Auch im Reformatbetrieb (Gaszusammensetzung 60 Vol.-% Wasserstoff, 25 Vol.-% Kohlendioxid, 15 Vol.-% Stickstoff, 40 ppm Kohlenmonoxid) wies die MEE mit 600 mV bei 500 mA/cm² sehr gute Leistungswerte auf.

### Beispiel 3:

Es wurde eine weitere Tinte mit der folgenden Zusammensetzung hergestellt:

| | |
|---|---|
| 15,0 g | Pt-Trägerkatalysator (40 % Pt/C, Fa. Degussa-Hüls) |
| 50,0 g | Nafion®-Lösung (10 % in Wasser) |
| 20,0 g | Wasser (vollentsalzt) |
| 15,0 g | Diethylenglykol |
| 100,0 g | |

Das Verhältnis Katalysator/Nafion® lag bei 3:1. Der Anteil an Diethylenglykol betrug 23 Gew.-% (bezogen auf den Gesamtwassergehalt). Die Tinte wurde auf Vorder- und Rückseite einer Ionomermembran (Dicke 30 um), aufgebracht. Die Haftung der Katalysatorschichten nach der Trocknung und Wässerung war sehr gut. Die Leistung in der PEM-Vollzelle im Wasserstoff/Luft-Betrieb lag bei 650 mV bei einer Stromdichte von 500 mA/cm².

### Beispiel 4:

Die Tinte nach Beispiel 2 wurde auf eine Gasverteilerstruktur, die mit einer Rußausgleichsschicht versehen war, mittels Siebdruck aufgebracht und anschließend bei 80 °C getrocknet. Die Beladung dieses so hergestellten Anodengasverteilers betrug 0,3 mg Pt/cm² und 0,15 mg Ru/cm². Die aktive Zellfläche lag bei 50 cm². In einem zweiten Schritt wurde die Tinte nach Beispiel 1 auf eine Gasverteilerstruktur wiederum mittels Siebdruck aufgebracht und getrocknet. Der so erzeugte Kathodengasverteiler besaß eine Beladung von 0,4 mg Pt/cm². Zur Herstellung einer Membran-Elektroden-Einheit wurde eine trockene Ionomermembran (Nafion 112, Fa. DuPont) zwischen Anoden- und Kathodengasverteiler eingebracht und bei 135°C mit einem Druck von 7 kN verpresst. Das so hergestellte Gebilde wurde in eine PEM-Brennstoffzelle gebracht und im Reformat/Luft-Betrieb (Gaszusammensetzung s. Beispiel 2) vermessen. Die Zellspannung betrug 630 mV bei einer Stromdichte von 500 mA/cm².

## Patentansprüche

1. Tinte für die Herstellung von Membran-Elektroden-Einheiten für PEM-Brennstoffzellen enthaltend ein Katalysatormaterial, ein lonomer, als Hanptkompounerte Wasser sowie ein organisches Lösungsmittel,
**dadurch gekennzeichnet,**
**dass** das organische Lösungsmittel wenigstens eine Verbindung aus der Gruppe der linearen Dialkohole mit einem Flammpunkt oberhalb 100°C ist und in einer Konzentration
zwischen 5 und 25 Gew.-%, bezogen auf das Gewicht des Wassers, in der Tinte vorliegt.

2. Tinte nach Anspruch 1,
**dadurch gekennzeichnet,**
**dass** als organisches Lösungsmittel Ethylenglykol, Diethylenglykol, Propylenglykol, Dipropylenglykol, Butandiol oder Gemische davon in der Tinte vorllegen.

3. Verwendung der Tinte nach einem der Ansprüche 1 oder 2 für die Herstellung von mit Katalysator beschichteten Membranen für PEM-Brennstoffzellen.

4. Verwendung der Tinte nach einem der Ansprüche 1 oder 2 für die Herstellung von Membran-Elektroden-Enheiten für PEM-Brennstoffzellen

5. Verwendung der Tinte nach einem der Ansprüche 1 oder 2 für die Herstellung von mit Katalysator beschichteten Gasverteilersubstraten für PEM-Brennstoffzellen.

6. Tinte nach Anspruch 1,
**dadurch gekennzeichnet,**
**dass** als Katalysatormaterial ein edelmetallhaltiger Trägerkatalysator verwendet wird.

7. Tinte nach Anspruch 1,
**dadurch gekennzeichnet,**
**dass** als Katalysatormaterial ein trägerfreier Katalysator verwendet wird.

8. Tinte nach Anspruch 7, wobei der trägerfreie Katalysator Platin-Mohr oder Platin-Pulver ist.

## Claims

1. Ink for producing membrane-electrode units for PEM fuel cells, which comprises a catalyst material, an ionomer, water as main component and also an organic solvent, **characterized in that** the organic solvent is at least a compound from the group of linear dialcohols having a flash point above 100°C and is present in the ink in a concentration of from 5 to 25% by weight, based on the weight of water.

2. Ink according to Claim 1, **characterized in that** ethylene glycol, diethylene glycol, propylene glycol, dipropylene glycol, butanediol or a mixture thereof is present in the ink as the organic solvent.

3. Use of the ink according to Claim 1 or 2 for producing catalyst-coated membranes for PEM fuel cells.

4. Use of the ink according to Claim 1 or 2 for producing membrane-electrode units for PEM fuel cells.

5. Use of the ink according to either Claim 1 or 2 for producing catalyst-coated gas distributor substrates for PEM fuel cells.

6. Ink according to Claim 1, **characterized in that** a supported catalyst comprising a noble metal is used as catalyst material.

7. Ink according to Claim 1, **characterized in that** an unsupported catalyst is used as catalyst material.

8. Ink according to Claim 7, wherein the unsupported catalyst is platinum black or platinum powder.

## Revendications

1. Encre destinée à la fabrication d'unités d'électrodes à membrane pour cellules à combustible PEM, qui comprend un matériau de catalyseur, un ionomère, de l'eau qui en forme le composant principal et un solvant organique,
**caractérisée en ce que**
le solvant organique est au moins un composé sélectionné dans l'ensemble des dialcools linéaires dont le point de flamme est supérieur à 100°C et est présent dans l'encre à une concentration comprise entre 5 et 25 % en poids par rapport au poids de l'eau.

2. Encre selon la revendication 1, **caractérisée en ce que** l'encre contient comme solvant organique de l'éthylène glycol, du diéthylène glycol, du propylène glycol, du dipropylène glycol, du butane diol ou leurs mélanges.

3. Utilisation de l'encre selon l'une des revendications 1 ou 2 pour la fabrication de membranes revêtues de catalyseur pour des cellules à combustible PEM.

4. Utilisation de l'encre selon l'une des revendications 1 ou 2 pour la fabrication d'unités d'électrodes à membrane pour des cellules à combustible PEM.

5. Utilisation de l'encre selon l'une des revendications 1 ou 2 pour la fabrication de substrats de répartition de gaz, revêtus de catalyseur, pour des cellules à combustible PEM.

6. Encre selon la revendication 1, **caractérisée en ce que** l'on utilise comme matériau de catalyseur un catalyseur contenant un métal précieux fixé sur support.

7. Encre selon la revendication 1, **caractérisée en ce que** l'on utilise comme matériau de catalyseur un catalyseur sans support.

8. Encre selon la revendication 7, dans laquelle le catalyseur sans support est un platine de Mohr ou une poudre de platine.
